**Europäisches Patentamt**

**European Patent Office**

**Office européen des brevets**

(19)

(11) Veröffentlichungsnummer: **0 023 734**
**A1**

(12) ## EUROPÄISCHE PATENTANMELDUNG

(21) Anmeldenummer: **80200687.4**

(22) Anmeldetag: **14.07.80**

(51) Int. Cl.³: **C 09 B 67/40**, D 06 P 5/00,
D 06 P 1/16, C 09 D 11/02,
D 06 L 3/12

(30) Priorität: **25.07.79 CH 6899/79**

(43) Veröffentlichungstag der Anmeldung: **11.02.81**
**Patentblatt 81/6**

(84) Benannte Vertragsstaaten: **DE FR GB IT**

(71) Anmelder: **Rohner AG Prattein, Gempenstrasse 6,
CH-4133 Prattein (CH)**

(72) Erfinder: **Wegmann, Jacques, Dr., Bückenweg 22,
CH-4126 Bettingen (CH)**
Erfinder: **Peter, Richard, Dr., Unterer Rheinweg 98,
CH-4057 Basel (CH)**

(74) Vertreter: **Becher, Pauline, Dr. et al, Patentanwaltsbüro
A. Braun Holbeinstrasse 36-38, CH-4051 Basel (CH)**

(54) **Organisches, thixotropes Farbmittelpräparat für den Sublimations-Transferdruck, sein Herstellungsverfahren, die dieses Präparat enthaltenden Drucktinten sowie ihre Anwendung und die mittels solcher Tinten bedruckten Textilien oder Zwischenträger.**

(57) Das Präparat enthält:

a) 20 bis 50 Gew.% mindestens eines in Wasser schwerlöslichen bis unlöslichen organischen Farbmittels mit einer mittleren Teilchengrösse unter 5 $\mu$m,

b) mindestens ein wasserlösliches organisches Lösungsmittel,

c) höchstens 10 Gew.% mindestens eines im Lösungsmittel oder Lösungsmittelgemisch löslichen hochpolymeren thermoplastischen filmbildenden Kunstharzes und

d) gegebenenfalls mindestens ein Additiv.

Das Farbmittel oder jedes der Farbmittel ist bei 160 bis 240° C sublimierbar. Das Lösungsmittel oder jedes der Lösungsmittel enthält mindestens zwei Sauerstoffatome. Mindestens eines der Sauerstoffatome liegt in Form einer freien oder substituierten alkoholischen Hydroxylgruppe vor. Das Lösungsmittel oder jedes der Lösungsmittel hat einen Siedepunkt von mindestens 120° C und einen Flammpunkt von mindestens 40° C.

Die Präparate werden durch mechanische Zerkleinerung des Farbmittels oder Farbmittelgemische in Gegenwart des Kunstharzes oder Kunstharzgemisches in dem Lösungsmittel oder Lösungsmittelgemisch hergestellt. Gegebenenfalls erfolgt die Zerkleinerung in Gegenwart des Additives oder Additivgemisches.

Die Präparate können mit mindestens einem filmbildenden Bindemittel und mindestens einem unterhalb 120° C siedenden Lösungsmittel zu Drucktinten verarbeitet werden. Das Bindemittel oder Bindemittelgemisch ist ein Kunstharz oder Kunstharzgemisch aus der Gruppe der Cellulosederivate und/oder Polyvinylbutyrale. Das Lösungsmittel oder Lösungsmittelgemisch ist aus Alkoholen, Ketonen und/oder Estern gewählt.

Die Drucktinten eignen sich für das Bedrucken von textilen Gebilden oder von Zwischenträgern für den Sublimations-Transferdruck.

Die Präparate sind gießbar und lagerbeständig und als Handelsformen geeignet. Sie lassen sich leicht verflüssigen und in organischem oder wäßrigem Medium dispergieren.

0023734

Organisches, thixotropes Farbmittelpräparat für den Sublimations-Transferdruck

Die vorliegende Erfindung bezieht sich auf neue, als Handelsformen geeignete organische, thixotrope, giessbare, lagerbeständige Präparate von organischen Farbmitteln, die leicht zu verflüssigen, stabil, feindispers und in organischen oder wässrigen Medien leicht dispergierbar sind und neben den organischen Farbmitteln bestimmte organische Lösungsmittel sowie bestimmte Kunstharze enthalten. Ferner bezieht sich die Erfindung auf ein Verfahren zur Herstellung dieser Präparate sowie auf diese Präparate enthaltende Drucktinten, auf die Verwendung dieser Drucktinten zum Bedrucken von Textilien oder Zwischenträgern für den Sublimations-Transferdruck und auf die so bedruckten Textilien bzw. Zwischenträger.

Die Farbmittel sind nach DIN 55 944 einzuteilen in: Anorganische Pigmente/Organische Pigmente (unlösliche organische Farbstoffe)/Lösliche organische Farbstoffe. Die erfindungsgemässen Präparate können somit als Farbmittel organische Pigmente bzw. unlösliche organische Farbstoffe oder lösliche organische Farbstoffe enthalten.

Für die Herstellung von wässrigen oder insbesondere organischen Drucktinten, die für das Bedrucken von Zwischenträgern für den Sublimations-Transferdruck bestimmt sind, mussten die für diesen Zweck geeigneten Farbmittel, insbesondere Dispersionsfarbstoffe, in spezielle Handels- bzw. Applikationsformen übergeführt werden. Als Handels- bzw. Applikationsformen wurden sowohl feste als auch flüssige Farbmittelpräparate vorgeschlagen. Von den zahlreichen Vorschlägen wurde nur ein Teil auch in die Praxis umgesetzt.

Die DE-AS Nr. 17 71 813 bezieht sich auf die Verwendung von Mischungen (d.h. Präparaten), die mindestens einen bei 180 bis 220 °C sublimierbaren Dispersionsfarbstoff und ein in organischen Lösungsmitteln leicht lösliches Cellulosederivat enthalten, zur Herstellung von Drucktinten. Diese Präparate werden nach den Beispielen durch Zusammenkneten ihrer Komponenten in Knetapparaten, wie Muldenknetern (Trogknetern), oder durch Zerstäubungstrocknung von wässrigen Dispersionen gleicher Gewichtsmengen des Dispersionsfarbstoffes und des Cellulosederivates hergestellt. Die Präparate werden zur Herstellung der Drucktinten in einem unter 100 °C siedenden organischen Lösungsmittel oder Lösungsmittelgemisch verteilt, gegebenenfalls in Gegenwart von zusätzlichen filmbildenden Harzen; die Verteilungsoperation muss in der Regel mit Hilfe von Schnellrührern ausgeführt werden. Abgesehen von dem aufwendigen Verfahren zur Herstellung der Präparate haben sie den Nachteil einer relativ hohen Eigenviskosität. Dadurch ist die Anzahl der aus ihnen herstellbaren Drucktinten beschränkt.

Neuartige Verfahren zur Herstellung von analogen festen Farbstoff- und Pigmentpräparaten mit höherer Farbstoffkonzentration werden in den CH-PS Nr. 565 210 und Nr. 557 413 (US-PS Nr. 3 923 452 und Nr. 3 844 806) vor-

0023734

geschlagen. Dort sind z.B. Präparate beschrieben, die 75 Gew.% feindispersen Farbstoff enthalten. Von Bindemitteln völlig freie Farbstoffgranulate bzw. Farbstoffaufbereitungen sind aus der DE-AS Nr. 2 412 369 bzw. der DE-OS Nr. 24 59 457 (GB-PS Nr. 1 474 112 und Nr. 1 491 736) bekannt. Die Granulate sollen, sofern die Farbstoffe wasserlöslich sind, in heissem und in den meisten Fällen auch in kaltem Wasser leicht löslich sein. Ihre Herstellung ist aber kompliziert. Die Aufbereitungen sollen sowohl in wässrigem als auch in organischem Medium leicht dispergierbar sein. Sie können z.B. durch Luftstrahlmahlung erhalten werden. Ihre Herstellung ist aber mit Schwierigkeiten verbunden; sie stäuben stark und sind sehr voluminös, weshalb sie sich in der Praxis nicht durchgesetzt haben.

Die Herstellung flüssiger Farbstoffzubereitungen durch Dispergieren der Farbstoffe in Aethanol oder Isopropanol in Gegenwart bestimmter Mahlhilfsmittel wird in der CH-PS Nr. 564 590 (FR-OS Nr. 2 177 755) beschrieben. Diese flüssigen Zubereitungen haben den Nachteil, dass sie sich absetzen und leicht eintrocknen; deshalb haben sie sich in der Praxis nicht eingeführt. Ferner wird auch die Herstellung von festen Zubereitungen durch Verdünnen der flüssigen Zubereitungen mit Wasser und anschliessende Filtration vorgeschlagen. Derartige feste Zubereitungen sind sehr feinteilig; deshalb lassen sie sich schwer isolieren und stäuben stark.

Aus der DE-OS Nr. 25 11 032 sind auch flüssige Dispersionsfarbstoffpräparate als Handeslformen bekannt, die aus Lösungen der Farbstoffe in mindestens einem Lösungsmittel bestehen. Dabei sind allerdings keine hohen Farbstoffkonzentrationen erzielbar, und beim Mischen der Lösungen mit anderen Lösungsmitteln zwecks Herstellung von Drucktinten scheiden sich Kristalle aus. Das gleiche gilt für die nicht-wässrigen flüssigen Färbepräparate nach der FR-PS Nr. 1 374 712, die gewöhnlich 40 bis 80 Gew.% mindestens eines flüssigen oder verflüssigten Dispergiermittels, 20 bis 50 Gew.% mindestens eines Dispersionsfarbstoffes sowie gegebenenfalls eine hochsiedende organische, mit Wasser mischbare Flüssigkeit enthalten. Diese Handelsformen wurden für die Ausziehfärbung aus Lösungsmitteln entwickelt und eignen sich nicht für die Herstellung von Drucktinten.

Dispergiermittelarme wässrige Farbstoff- und Aufhellerpräparate wurden in der DE-OS Nr. 25 20 527 (US-PS Nr. 3 977 828 und 4 042 320) vorgeschlagen. Sie haben sich in der Praxis bewährt. Auch die Verwendung der Präparate zur Herstellung von wässrigen oder Wasser-in-Oel-Druckpasten für das Bedrucken von Zwischenträgern für das Transferdruckverfahren wird vorgeschlagen. Mit diesen Druckpasten können aber nicht die Spitzenresultate erzielt werden, die man bei Verwendung von rein organischen Drucktinten erhält.

Die erfindungsgemässen Präparate enthalten, bezogen auf das Präparat,

a) 20 bis 50 Gew.%, vorzugsweise 30 bis 40 Gew.%, mindestens eines bei 160 bis 240 °C sublimierbaren, in Wasser schwerlöslichen bis unlöslichen, feindispersen organischen Farbmittels, vorzugsweise eines Dispersionsfarbstoffes, mit einer mittleren Teilchengrösse unter 5 µm, vorzugsweise von 2 bis 3 µm,

b) mindestens ein wasserlösliches organisches Lösungsmittel mit mindestens zwei Sauerstoffatomen, von denen
mindestens eines in Form einer freien oder substituierten alkoholischen Hydroxylgruppe vorliegt, mit einem
Siedepunkt von mindestens 120 °C, vorzugsweise 120 bis
260 °C, insbesondere 150 bis 200 °C, und mit einem Flammpunkt von mindestens 40 °C, vorzugsweise mindestens einen
Alkylenglycoläther,

c) höchstens 10 Gew.%, vorzugsweise 1 bis 2 Gew.%, mindestens eines im Lösungsmittel oder Lösungsmittelgemisch
löslichen hochpolymeren thermoplastischen filmbildenden Kunstharzes,
vorzugsweise mindestens eines Cellulosederivates und/
oder Polyvinylbutyrals, sowie

d) gegebenenfalls mindestens ein Additiv, wie Antischaummittel oder Mittel zur Verhinderung der Schimmelbildung.


Als Farbmittel kommen bei Temperaturen von 160
bis 240 °C sublimierbare Dispersionsfarbstoffe, Pigmente,
Küpenfarbstoffe und wasserunlösliche optische Aufheller
in Betracht. Derartige Farbmittel sind dem Fachmann bekannt. Vorzugsweise sind sie durch Sublimation, d.h. in
der Dampfphase, innerhalb von 30 bis 60 Sekunden von den
Zwischenträgern auf die Textilien transferierbar. Eine
ganze Reihe derartiger Farbmittel ist aus der oben erwähnten DE-AS Nr. 17 71 813 sowie aus der DE-AS Nr. 2 263 140
bekannt. Die Farbmittel, insbesondere Farbstoffe, können
auch durch Erhitzen, Umkristallisieren oder Resinieren,
wie in den DE-AS Nr. 24 08 899 und 2 100 439 beschrieben,
vorbehandelt werden.

- 6 -

0023734

Geeignete Lösungsmittel sind z.B. Diacetonalkohol oder Butyrolacton. Besonders gute Ergebnisse werden indessen mit Alkylenglycoläthern mit Siedepunkten von 120 bis 260 ℃, vorzugsweise 150 bis 200 ℃, und Flammpunkten über 40 ℃ oder deren Gemischen erzielt. Alkyläther (wie der Methyl-, Aethyl-, Propyl- oder Butyläther) des Aethylenglycols, Diäthylenglycol und seine Alkyläther sowie Dipropylenglycol, ferner Ester von Alkylenglycolmonoäthern, wie Aethylenglycolmethylätheracetat (2-Methoxyäthylacetat), sind geeignet. Vorzugsweise verwendet man solche Lösungsmittel, die mit Wasser unbeschränkt mischbar sind, oder ihre Gemische.

Als Kunstharze kommen Celluloseäther oder Celluloseester, insbesondere aber Polyvinylbutyrale, in Betracht. Die Kunstharze wirken als Bindemittel. Vorzugsweise beträgt die Kunstharzkonzentration höchstens 10 % der Farbmittelkonzentration. Da die erfindungsgemässen Präparate thixotrop sind, erstarren sie beim Stehenlassen so rasch, dass kein Absetzen eintreten kann. Daher brauchen sie zur Stabilisierung und Viskositätsregulierung nur die angegebene geringe Menge von höchstens 10 Gew.% Kunstharz oder Kunstharzgemisch zu enthalten.

Die erfindungsgemässen Präparate werden hergestellt, indem man, bezogen auf das fertige Präparat,

a) 20 bis 50 Gew.%, vorzugsweise 30 bis 40 Gew.%, des Farbmittels oder Farbmittelgemisches in

b) dem Lösungsmittel oder Lösungsmittelgemisch in Gegenwart von

c) höchstens 10 Gew.%, vorzugsweise 1 bis 2 Gew.%, des Kunstharzes oder Kunstharzgemisches sowie gegebenenfalls in Gegenwart

d) des Additives oder Additivgemisches

mechanisch zerkleinert, bis die mittlere Teilchengrösse des Farbmittels oder Farbmittelgemisches unter 5 µm liegt und vorzugsweise 2 bis 3 µm beträgt.

Vorzugsweise erfolgt die mechanische Zerkleinerung durch Mahlen in einer Rührwerkskugelmühle. Man kann die erfindungsgemässen Präparate z.B. äusserst einfach herstellen, indem man das Kunstharz oder Kunstharzgemisch im Lösungsmittel oder Lösungsmittelgemisch löst und das rohe, getrocknete Farbmittel oder Farbmittelgemisch in die Lösung einrührt und anschliessend in einer Rührwerkskugelmühle unter Verwendung von Glas-, Keramik- oder Metallkugeln mahlt, bis das Farbmittel oder Farbmittelgemisch die gewünschte mittlere Teilchengrösse unter 5 µm hat. Vorzugsweise sind nach dem Mahlen keine Farbmittelteilchen mit einer Teilchengrösse von mehr als 5 µm vorhanden. Durch Abtrennung der Mahlkörper und gegebenenfalls anschliessende Filtration wird ein gebrauchsfertiges Präparat erhalten, doch können erforderlichenfalls noch weiteres Kunstharz und/oder andere Zusätze, wie Antischaummittel oder Mittel zur Verhinderung der Schimmelbildung, zugesetzt werden. Diese Zusätze können selbstverständlich auch in einem beliebigen früheren Zeitpunkt zugegeben werden.

Die erfindungsgemässen Präparate erstarren nach kurzem Stehenlassen zu einem stabilen Gel, das aber durch leichtes Schütteln oder Rühren wieder verflüssigt und giessbar gemacht werden kann. Infolge der Eigenschaften der verwendeten Lösungsmittel und Kunstharze können die

0023734

Präparate gefahrlos und ohne Schwierigkeiten gelagert und transportiert werden. Gegenüber den bekannten und in der Technik als Handelsformen eingeführten Präparaten haben sie neben der leichten Herstellbarkeit, der guten Lagerbeständigkeit und der leichten Transportierbarkeit den weiteren Vorteil einer praktisch vernachlässigbaren Eigenviskosität, so dass sie zur Herstellung von Drucktinten mit hoher Farbmittelkonzentration oder zur Erhöhung der Farbmittelkonzentration vorhandener Drucktinten verwendet werden.

Ueberraschenderweise können die erfindungsgemässen Präparate im Gegensatz zu der grossen Anzahl von bekannten Präparaten, die andere hochsiedende Lösungsmittel enthalten, mit niedrigsiedenden Lösungsmitteln zu Drucktinten verarbeitet werden, die Drucke liefern, die nach Trocknen bei Raumtemperatur in üblicher Weise eine gute Abriebfestigkeit haben und stapelbar sind. Die Präparate können mit geeigneten Bindemittellösungen auf rein organischer oder wässriger Basis unter Verwendung üblicher Rührwerke leicht zu Drucktinten verarbeitet werden.

Die erfindungsgemässen Drucktinten enthalten neben einem erfindungsgemässen Präparat mindestens ein Kunstharz, das aus Cellulosederivaten, vorzugsweise Celluloseäthern und/oder alkohollöslichen gemischten Celluloseestern, und/oder Polyvinylbutyralen gewählt ist und als Bindemittel dient, sowie mindestens ein Lösungsmittel mit einem Siedepunkt unter 120 °C, das aus Alkoholen, Ketonen und/oder Estern gewählt ist.

Für die Herstellung von Drucktinten aus den Präparaten kommen die gewöhnlich für diesen Zweck verwendeten und oben definierten niedrigsiedenden, das Farbmittel oder Farbmittelgemisch nicht oder nur sehr wenig anlösenden Lösungsmittel, wie Aethanol, Propanol oder Isopropanol, vorzugsweise in Kombination mit Methyläthylketon oder Isopropylacetat, in Frage. Als filmbildende Bindemittel eignen sich Cellulosederivate, vorzugsweise Celluloseäther, wie Aethylcellulose oder Hydroxypropylcellulose, und/oder alkohollösliche gemischte Celluloseester, wie Celluloseacetopropionat und Celluloseacetobutyrat, und/oder Polyvinylbutyrale; die letzteren werden besonders bevorzugt. Eine zur Erzielung optimaler Resultate geeignete Kombination von Lösungsmittel(n) und als Bindemittel dienenden Kunstharz(en) kann leicht durch Vorversuche ermittelt werden. Da die erfindungsgemässen Präparate, wie gesagt, eine praktisch vernachlässigbare Eigenviskosität haben, können sie zur Herstellung von hochkonzentrierten Drucktinten dienen, deren Viskosität mit Hilfe der verwendeten filmbildenden Bindemittel beliebig eingestellt werden kann.

Zur Herstellung von Drucktinten auf wässriger Basis, wie sie beispielsweise auf Textildruckmaschinen, z.B. für den Rotationsfilmdruck, verwendet werden, kann man die erfindungsgemässen Präparate mittels eines Schnellrührers in wässrige Verdickungsmittel, z.B. Polyacrylsäurederivate, wasserlösliche Cellulosederivate, Natriumalginat oder natürliche Verdickungsmittel, wie Gummi arabicum oder Traganth, einrühren.

Die erfindungsgemässen rein organischen Drucktinten oder auch wässrige Drucktinten, die aus den erfindungsgemässen Präparaten hergestellt sind, können zum Direktdruck auf vorzugsweise synthetische Textilien verwendet werden. Ueblicherweise werden sie aber zum Bedrucken von Zwischenträgern, vorzugsweise Papierbahnen, für den Sublimations-Transferdruck verwendet.

Ein auf diese Weise hergestellter bedruckter Zwischenträger aus Papier kann noch leicht gelatiniert werden, um eine optimale Haftung zwischen Papier und zu bedruckenden Textilien beim Transferdruck sicherzustellen. Die Qualität des erhaltenen Druckes kann nach Durchlaufen einer kurzen Trockenstrecke in Luft von Raumtemperatur geprüft werden, indem man die Abriebfestigkeit bestimmt und untersucht, ob beim Aufrollen kein Abklatschen (d.h. Ausbluten oder Abflecken der Drucke) unter Bildung sogenannter Geisterbilder eintritt.

In den folgenden Beispielen sind Teile und Prozente auf das Gewicht bezogen, wenn nichts anderes angegeben ist.

Beispiel 1

40 Teile 1,4-Di-(N-methylamino)-anthrachinon werden in eine Lösung von 2 Teilen Polyvinylbutyral in 58 Teilen Aethylenglycolmonobutyläther eingerührt und in einer Rührwerkskugelmühle unter Zusatz von 300 Teilen Glaskugeln so lange gemahlen, bis die mittlere Teilchengrösse um 2 µm liegt. Man trennt die Dispersion von den Mahlkörpern ab und erhält ein dünnflüssiges Präparat, das nach kurzem Stehenlassen erstarrt, aber auch nach längerer Lagerung durch kurzes Rühren oder Schütteln wieder verflüssigt werden kann.

25 Teile dieses Präparates werden mittels eines Rührwerks mit 67 Teilen Aethanol und 8 Teilen Polyvinylbutyral verrührt, bis eine homogene Mischung entsteht. Mit dieser Drucktinte bedruckt man eine Papierbahn. Der resultierende Druck ist schon nach kurzem Trocknen an der Luft bei Raumtemperatur abriebfest. Die Papierbahn wird mit einem Polyestergewebe zusammen in einer Presse 30 Sekunden lang auf 210 °C erhitzt. Es resultiert ein kräftiger, blauer Druck.

Verwendet man anstelle des oben genannten Farbstoffes einen der in der DE-As Nr. 17 71 813 genannten Farbstoffe in einer Konzentration zwischen 30 und 40 %, bezogen auf das Präparat, und verfährt im übrigen wie beschrieben, so erhält man ein ähnlich gutes Ergebnis.

Verwendet man anstelle von Aethylenglycol-monobutyläther ein Gemisch von Aethylenglycol- und Diäthylenglycol-monomethyläther und verfährt im übrigen wie oben beschrieben, so erhält man ähnlich gute Präparate.

### Beispiel 2

30 Teile 1-Amino-2-phenoxy-4-hydroxy-anthrachinon werden in einer Lösung von 1 Teil Aethylcellulose in 69 Teilen Aethylenglycolmonoäthyläther suspendiert und unter Zusatz von 300 Teilen Zirkoniumoxidkugeln von etwa 2 bis 3 mm Druchmesser in einer Rührwerkskugelmühle gemahlen, bis die durchschnittliche Teilchengrösse unter 5 μm liegt. Anschliessend trennt man die Mahlkörper ab und erhält eine dünnflüssige Dispersion, die nach kurzem Stehen erstarrt, aber durch leichtes Schütteln oder Rühren wieder in ein giessbares Präparat übergeführt werden kann. Infolge ihrer Konsistenz setzt die Dispersion sich auch bei längerem Lagern nicht ab und kann ohne Veränderung bei Temperaturen zwischen -20 und +60 °C aufbewahrt werden.

50 Teile dieses Präparates werden mit 42 Teilen Aethanol und 8 Teilen Aethylcellulose verrührt. Mit dieser Drucktinte bedruckt man eine Papierbahn und erhält einen abriebfesten, stapelbaren Druck. Die bedruckte Papierbahn wird zusammen mit einem Polyestergewebe in einer Presse 30 Sekunden lang auf 210 °C erhitzt, wobei ein kräftiges, rotes Druckmuster entsteht.

Aehnlich gute Resultate werden bei Verwendung von Diäthylenglycolmonomethyläther, Dipropylenglycol oder Aethylenglycoldiäthyläther anstelle des Aethylenglycolmonoäthyläthers erhalten.

Die Aethylcellulose kann mit ähnlich gutem Erfolg ganz oder teilweise durch alkohollösliches Celluloseacetopropionat ersetzt werden.

Beispiel 3

20 Teile des Azofarbstoffes aus diazotiertem Chlortoluidin und Phenylmethylpyrazolon werden in einer Lösung von 1 Teil Hydroxypropylcellulose in 79 Teilen Aethylenglycolmonomethyläther unter Zusatz von 300 Teilen Glasperlen von 1 mm Durchmesser gemahlen, bis die mittlere Teilchengrösse unter 5 µm liegt. Nach Abtrennen der Mahlkörper erhält man einen stabilen, sich nicht absetzenden Teig.

20 Teile dieses Teiges werden in eine wässrige Verdickung, die 4 % Natriumalginat enthält, eingerührt. Mit dieser Drucktinte wird eine Papierbahn bedruckt und an der Luft getrocknet. Anschliessend wird sie mit einem mercerisierten Baumwollgewebe, welches zuvor mit einer 20 %igen Propylenglycollösung imprägniert worden ist, 30 Sekunden lang in einer Presse bei 210 °C zusammengepresst, ausgewaschen und getrocknet. Es resultiert ein echter, gelber Druck.

Verwendet man 20 Teile des gelben Azofarbstoffes aus diazotiertem m-Nitrotoluidin und Acetessigsäureanilid oder N-Methylpyrazolon und verfährt im übrigen wie beschrieben, so erhält man ähnlich gute Resultate.

Anstelle von Natriumalginat kann man auch das Natriumsalz eines Polyacrylsäurederivates oder der Carboxymethylcellulose verwenden.

### Beispiel 4

30 Teile 1,4-Bis-(isopropylamino)-anthrachinon werden mit 35 Teilen Dipropylenglycol und 34 Teilen Diäthylenglycoldiäthyläther in Gegenwart von 1 Teil Aethylcellulose in einer Rührwerkskugelmühle mit 300 Teilen Zirkoniumoxidkugeln von etwa 2 mm Durchmesser gemahlen, bis die Farbstoffteilchen einen mittleren Durchmesser von 2 µm haben. Dann verdünnt man den Teig mit 10 Teilen Dipropylenglycol und 10 Teilen Diäthylenglycoldiäthyläther auf 25 % Farbstoffgehalt und trennt die Kugeln ab. Es resultiert ein schwach thixotropes, leicht giessbares, sich nicht absetzendes und stabiles Präparat.

48 Teile dieses Präparates werden unter Zusatz von 8 Teilen Aethylcellulose mit 52 Teilen Aethanol verrührt. Es resultiert eine stabile, nicht kristallisierende und sich auch nicht absetzende Drucktinte. Mit dieser Drucktinte bedruckt man eine Papierbahn und presst sie anschliessend 30 Sekunden lang zusammen mit einem Polyamidgewebe in einer Presse bei 200 °C. Es resultiert ein brillantes, blaues Druckmuster.

Patentansprüche

1. Organisches, thixotropes, giessbares, lagerbeständiges Farbmittelpräparat, dadurch gekennzeichnet, dass es, bezogen auf das Präparat,

a) 20 bis 50 Gew.%, vorzugsweise 30 bis 40 Gew.%, mindestens eines bei 160 bis 240 °C sublimierbaren, in Wasser schwerlöslichen bis unlöslichen, feindispersen organischen Farbmittels, vorzugsweise eines Dispersionsfarbstoffes, mit einer mittleren Teilchengrösse unter 5 μm, vorzugsweise von 2 bis 3 μm,

b) mindestens ein wasserlösliches organisches Lösungsmittel mit mindestens zwei Sauerstoffatomen, von denen mindestens eines in Form einer freien oder substituierten alkoholischen Hydroxylgruppe vorliegt, mit einem Siedepunkt von mindestens 120 °C, vorzugsweise 120 bis 260 °C, insbesondere 150 bis 200 °C, und mit einem Flammpunkt von mindestens 40 °C, vorzugsweise mindestens einen Alkylenglycoläther,

c) höchstens 10 Gew.%, vorzugsweise 1 bis 2 Gew.%, mindestens eines im Lösungsmittel oder Lösungsmittelgemisch löslichen hochpolymeren thermoplastischen filmbildenden Kunstharzes, vorzugsweise mindestens eines Cellulosederivates und/oder Polyvinylbutyrals, sowie

d) gegebenenfalls mindestens ein Additiv, wie Antischaummittel oder Mittel zur Verhinderung der Schimmelbildung,

enthält.

- 15 -

0023734

2. Präparat nach Anspruch 1, dadurch gekennzeichnet, dass die Kunstharzkonzentration höchstens 10 % der Farbmittelkonzentration beträgt.

3. Präparat nach Anspruch 1 oder 2, dadurch gekennzeichnet, dass das Lösungsmittel oder Lösungsmittelgemisch mindestens einen Alkylenglycoläther mit einem Siedepunkt von 120 bis 260 °C, vorzugsweise 150 bis 200 °C, enthält.

4. Präparat nach einem der Ansprüche 1 bis 3, dadurch gekennzeichnet, dass das Farbmittel oder Farbmittelgemisch mindestens einen Dispersionsfarbstoff und/oder mindestens ein Pigment und/oder mindestens einen optischen Aufheller enthält.

5. Präparat nach einem der Ansprüche 1 bis 4, dadurch gekennzeichnet, dass das Kunstharz oder Kunstharzgemisch mindestens ein Cellulosederivat, vorzugsweise mindestens einen Celluloseäther und/oder Celluloseester, und/oder mindestens ein Polyvinylbutyral enthält.

6. Verfahren zur Herstellung von Farbmittelpräparaten nach einem der Ansprüche 1 bis 5, dadurch gekennzeichnet, dass man, bezogen auf das fertige Präparat,

a) 20 bis 50 Gew.%, vorzugsweise 30 bis 40 Gew.%, des Farbmittels oder Farbmittelgemisches in

b) dem Lösungsmittel oder Lösungsmittelgemisch in Gegenwart von

c) höchstens 10 Gew.%, vorzugsweise 1 bis 2 Gew.%, des Kunstharzes oder Kunstharzgemisches sowie gegebenenfalls in Gegenwart

d) des Additives oder Additivgemisches

mechanisch zerkleinert, bis die mittlere Teilchengrösse des Farbmittels oder Farbmittelgemisches unter 5 µm liegt und vorzugsweise 2 bis 3 µm beträgt.

7. Drucktinte, dadurch gekennzeichnet, dass sie mindestens ein Farbmittelpräparat nach einem der Ansprüche 1 bis 5, mindestens ein Kunstharz, das aus Cellulosederivaten, vorzugsweise Celluloseäthern und/oder alkohollöslichen gemischten Celluloseestern, und/oder Polyvinylbutyralen gewählt ist, als Bindemittel sowie mindestens ein Lösungsmittel mit einem Siedepunkt unter 120 ℃, das aus Alkoholen, Ketonen und/oder Estern gewählt ist, enthält.

8. Verwendung von Drucktinten nach Anspruch 7 zum Bedrucken von textilen Gebilden, vorzugsweise synthetischen Textilien, oder von nicht-textilen Flächengebilden, vorzugsweise von aus Papier bestehenden Zwischenträgern für den Sublimations-Transferdruck.

9. Vorzugsweise synthetische Textilien oder Zwischenträger, bedruckt mit einer Drucktinte nach Anspruch 7.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 177 755 (CIBA-GEIGY)  * Seite 1, Zeilen 7-28; Seite 2, Zeile 36 - Seite 3, Zeile 6 * | 1 |
| D | & CH - A - 564 590 | |
| | -- | |
| | FR - A - 2 160 970 (BAYER)  * Beispiel 6 * | 1,2,4 9 |
| | -- | |
| | FR - A - 2 289 585 (SANDOZ)  * Seite 1, Zeilen 4-15; Seite 2, Zeile 32 - Seite 3, Zeile 19 * | 1,7 |
| | -- | |
| | FR - A - 2 301 583 (SANDOZ)  * Seite 2, Zeilen 7-14; Seite 4, Zeilen 5-12, 23-29 * | 1,7 |
| | -- | |
| | FR - A - 1 581 585 (CIBA)  * Seite 1, Zeilen 19-30; Seite 4, Zeilen 24-40 * | 1,3,7 |
| | -- | |
| | FR - A - 2 085 756 (CIBA-GEIGY)  * Seite 5, Zeile 40 - Seite 6, Zeile 38 * | 1,3,7 |
| | -- | |
| A | FR - A - 2 085 786 (CIBA-GEIGY) | |
| A | FR - A - 2 325 699 (CIBA-GEIGY) | |
| A | FR - A - 2 225 488 (CIBA-GEIGY) | |
| A | CH - A - 476 893 (PROUVOST-MASUREL) | |

**KLASSIFIKATION DER ANMELDUNG (Int. Cl.³)**

C 09 B 67/40
D 06 P 5/00
1/16
C 09 D 11/02
D 06 L 3/12

**RECHERCHIERTE SACHGEBIETE (Int. Cl.³)**

C 09 B 67/40
67/38
67/42
67/46
D 06 P 5/00
C 09 D 11/02
D 06 L 3/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angefuhrtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-10-1980 | DAUKSCH |

EPA form 1503.1 06.78

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| A | FR - A - 1 575 069 (TRENTESAUX-TOULEMONDE) | |
| A | FR - A - 2 307 853 (DOLLFUS-MIEG) | |

----

**KLASSIFIKATION DER ANMELDUNG (Int. Cl.³)**

**RECHERCHIERTE SACHGEBIETE (Int. Cl.³)**

EPA Form 1503.2   06.78